# EUROPEAN PATENT SPECIFICATION

(11) **EP 2 590 804 B1**
(45) Date of publication and mention of the grant of the patent: **07.06.2017**
(21) Application number: 11803907.2
(22) Date of filing: 07.07.2011
(51) Int. Cl.: B29C 65/74, B65B 7/16, B65B 7/28

(54) **SEALING MACHINE**
VERSIEGELUNGSMASCHINE
MACHINE À SCELLER

(30) Priority: 07.07.2010 SE 1050749
(43) Date of publication of application: 15.05.2013
(73) Proprietor: TORUS PAK RESEARCH AND DEVELOPMENT S.À.R.L., 2540 Luxembourg (LU)
(72) Inventor: GILLBLAD, Rickard, S-439 92 Onsala (SE)
(74) Representative: Dennemeyer & Associates S.A.
(86) International application number: PCT/SE2011/050921
(87) International publication number: WO 2012/005678

(56) References cited:
- EP-A1- 0 559 290
- WO-A2-2010/018253
- DE-A1- 4 425 728
- FR-A1- 2 866 003
- JP-A- 6 344 299
- US-A1- 2008 110 574

## Description

### TECHNICAL FIELD

The present invention relates to a sealing machine for disposable trays, mainly used as food trays but also used for different other products packed in disposable trays.

### BACKGROUND ART

There is an increasingly large demand for food, meals and also other products sold in disposable trays. There are several criteria which the tray must fulfil, depending on the use. One important criterion is that it should be possible to seal the trays automatically in larger industries and that the same trays should be adapted for manual sealing at smaller end users, such as local restaurants.

In order to provide an appealing food tray, it is important that the covering foil acting as a lid for the tray is cut off close to the edges of the tray. A close cut of the foil will give a clean trimming of the edges which will enhance the appearance of the ready meal in the tray. Normally, the sealing machine is equipped with a roll of foil having the same width as the food tray, such that these two sides of the foil do not have to be cut. By placing the foil such that the front edge of the foil corresponds to the front edge of the tray, the front edge does also not have to be trimmed. On smaller, simpler sealing machines, the remaining rear side of the tray is cut clean with a separate hand held knife.

Some sealing machines may also be equipped with a knife for cutting the remaining rear side of the foil. The knife is positioned in the upper part of the sealing machine, at the rear side of the hot plate. When the upper part of the sealing machine is pressed against the tray, the knife will extend into a groove of the lower part of the sealing machine and will cut the foil. The sealing machine may also be equipped with two knives, one in front of the hot plate and one at the rear side. In this way, both the front and the rear edges of the tray may be trimmed at the same time.

Such sealing machines are well known to the skilled person. However, they display some drawbacks in certain situations. One drawback is that the knives may be difficult to clean since they are positioned next to the electric system of the hot plate. In the food industry, regular cleaning of the equipment is prescribed. The knives may pick up food remains that have spilled on the foil or on the trays. Scrap from the cut foil may also stick to the knives, such that the cutting may be impaired. The complete sealing machine may not be immersed in water, thus the knives must be cleaned in another way. Further, the knives are often retracted into a recess in the upper part when not in use, which also makes the cleaning difficult and time consuming.

GB 1325256, US 2001/0000559 A1, US 3823054, FR 2875217 A1, WO 2009/144714 A2, FR 2808502 A1, US 7370455 B2 and CA 1003803 all show different types of hand-operated sealing machines having a cutting means for cutting the lid foil. WO2010/018253 discloses a further known prior art. There is thus room for an improved sealing machine.

### DISCLOSURE OF INVENTION

An object of the invention is therefore to provide an improved sealing machine, which allows for an easy replacement of the knives for cutting the lid foil.

The solution to the problem according to the invention is described in the characterizing part of claim 1. The other claims contain advantageous embodiments and further developments of the sealing machine.

A sealing machine for sealing a disposable tray, comprising an upper part and a lower part, where the upper part comprises a sealing plate having a sealing surface adapted to heat a foil such that the foil adheres to the rim of a tray, the object of the invention is achieved in that the lower part comprises a plurality of knives that are adapted to cut the foil by a movement of the knife in an upward direction towards the foil and where the knives are fixedly mounted in a detachable cartridge.

By this first embodiment of the sealing machine according to the invention, a sealing machine is obtained, which allows for an easy removal of the cutting knives. The knives can thus be cleaned in an easy way, and it is also possible to exchange the knives in an easy way. If the knives are not required, they can be easily removed. Further, this embodiment allows for a clean cut of the lid foil close to the edges of the tray.

In an advantageous development of the invention, a sealing machine is obtained, where the cartridge comprises resilient means adapted to hold the cutting edge of the knives below the sealing surface when the upper part is in a rest position. This will hold the cutting edges of the knives covered such that a user will not be able to reach the cutting edges. Injuries are thus prevented. The knives will extend through longitudinal grooves in the die plate which will further help to conceal the cutting edges.

In an advantageous development of the invention, the knives are pushed upwards by a lever that is actuated by the handle when the upper part is in a cutting position. This secures that the knives are not raised before the upper part is closed and further that the foil is not cut before the sealing surface presses the lid foil against the rim of the tray. A clean cut of the foil is this provided for.

In an advantageous development of the invention, the knife cartridge is integrated with the die plate and a holding fixture. In this way, it is easy to adapt the sealing machine to different types of trays.

In an advantageous development of the invention, the sealing plate is detachably mounted in the upper part and is adapted to be replaced with another sealing plate. This allows the sealing machine to be adapted to more different types of trays.

In an advantageous development of the invention, the lower part further comprises a bottom adapted to support the bottom of the tray. In this way, trays with a supplementary food container can be sealed.

In an advantageous development of the invention, the upper part comprises stretching devices adapted to bear on the foil on each side of the tray in order to tension the foil when the upper part is in a sealing position. In this way, the foil is pre-tensioned before the sealing which allows thin foils to be used.

In an advantageous development of the invention, the lower part comprises positioning means adapted to position the foil in a predetermined position. This allows the use of preformed foils having a specific shape that must be exactly aligned to the tray shape.

### BRIEF DESCRIPTION OF DRAWINGS

The invention will be described in greater detail in the following, with reference to the embodiments that are shown in the attached drawings, in which
- Fig. 1: shows a side view of a sealing machine according to the invention,
- Fig. 2: shows a split view of the sealing machine according to the invention in the rest position,
- Fig. 3: shows a split view of the sealing machine according to the invention in the sealing position, and.
- Fig. 4: shows a split view of the sealing machine according to the invention in the cutting position.

### MODES FOR CARRYING OUT THE INVENTION

The embodiments of the invention with further developments described in the following are to be regarded only as examples and are in no way to limit the scope of the protection provided by the patent claims.

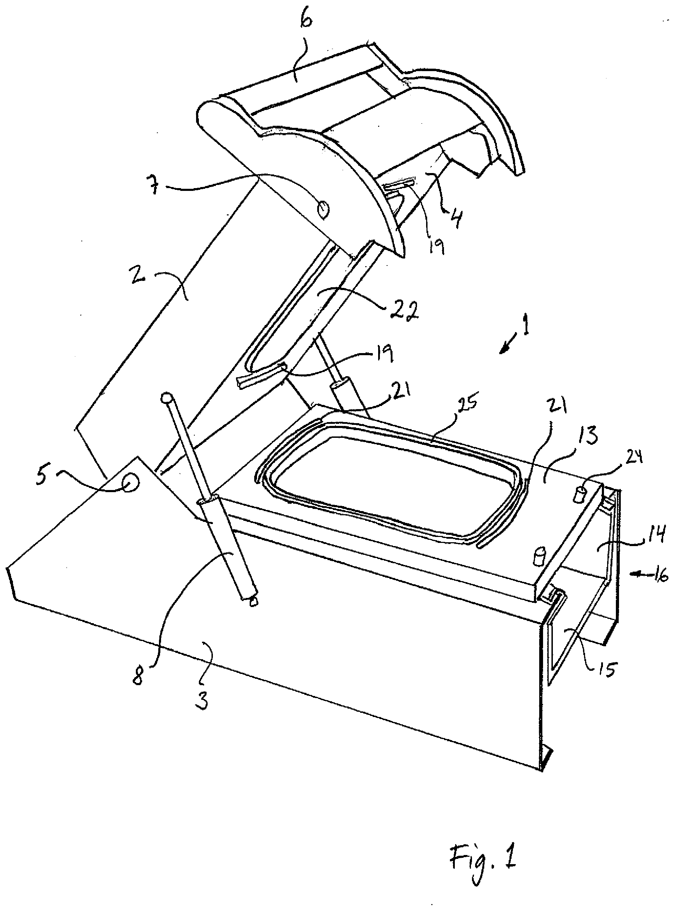

Fig. 1 shows a sealing machine 1 without a tray. The sealing machine 1 comprises in the shown example an upper part 2 and a lower part 3. The upper part is pivoted to the lower part by a rotatable joint 5 that allows the upper part to tilt down towards the lower part. The upper part comprises an electric sealing plate that is heated to a predetermined temperature in order to seal a tray positioned in the sealing machine. In known sealing machines, the sealing surface, i.e. the heated surface that can be used to seal a tray, covers the major part of the sealing plate and the sealing plate is flat. The upper part is operated by a handle 6 which is pivoted on the upper part by a rotatable joint 7. The upper part may also be supported by gas springs 8 that hold the upper part in an opened rest position.

The lower part 3 is the base of the sealing machine and is adapted to hold a roll of lidding film or foil that forms a lid on the tray after the sealing operation. The lower part further holds a die plate 13 in which a tray is to be positioned prior to the sealing. The die plate is provided with an opening that corresponds to the tray that is to be used. The opening is normally provided with a raised, somewhat resilient peripheral edge 25 that corresponds to the rim of the tray. The rim of the tray will thus rest on the raised edge when the sealing plate is pushed against the tray, which will provide a secure seal. The die plate can be exchanged to another die plate when another tray is to be used.

When a tray is to be sealed, the tray with the chosen content, normally a food product, is positioned in the die plate. The foil is pulled out over the tray such that the foil covers the opening of the tray. The upper part is then tilted downwards towards the lower part to the sealing position, in which the sealing plate abuts the rim of the tray. After a predetermined time, the upper part is released and the seal is ready. A sealing machine of this type is well known and a variety of similar sealing machines are available, having slightly different functionality. Some are completely manual and some are more or less automated.

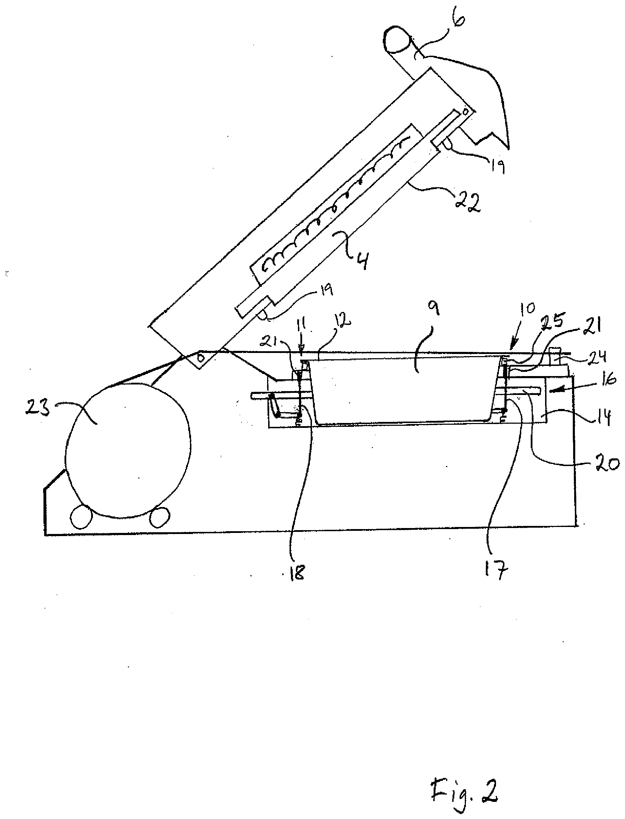

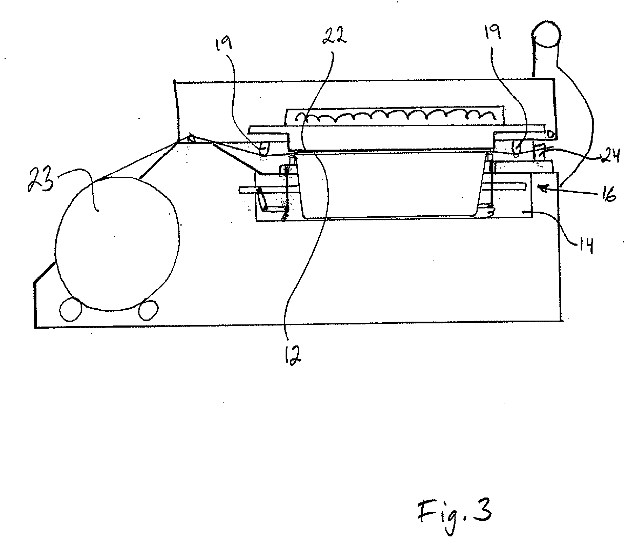

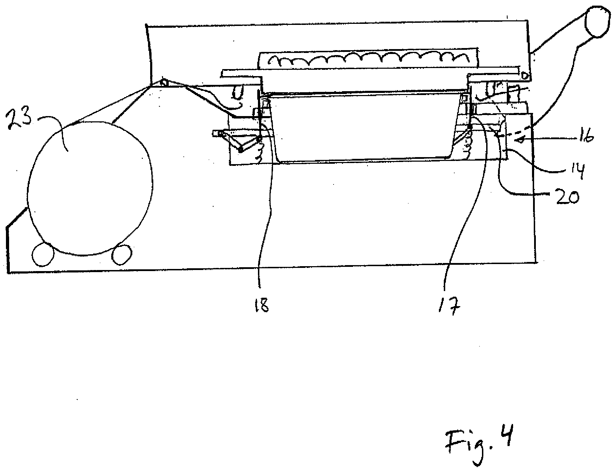

Fig. 2 shows a split view of the sealing machine with the upper part in the rest position, Fig. 3 shows a split view of the sealing machine with the upper part in the sealing position and Fig. 4 shows a split view of the sealing machine with the upper part in the cutting position.

The sealing plate in the inventive sealing machine is adapted to the tray that is to be sealed. The sealing surface 22 of the sealing plate 4 thus corresponds to the shape of the tray, and more specifically follows the outer edge of the rim of the tray to which the lidding foil 23 is to be sealed. In this way, the tray may be provided with an extra part at the rim region, such as a handle, to which no foil should be sealed. The sealing surface 22 of the sealing plate 4 covers the complete shape of the tray, not just the rim 12 of the tray. This allows for a supplementary food container in the tray to be sealed at the same time as the tray is sealed. The sealing plate may be exchanged to fit different sizes and shapes of trays. The sealing plate may e.g. consist of a metal plate with a flat rear surface that is inserted into slots at each side of the upper part. In order to obtain a good heat transfer from the heating element to the sealing surface, the heating element may be resiliently held in the upper part such that it is pressed against the sealing plate. It is also possible to integrate the heating element with the sealing plate and to use a socket or the like to connect the heating element to the upper part. Another possibility is to exchange the complete upper part.

The inventive sealing machine further comprises a holding fixture 14. The holding fixture 14 is positioned in the lower part in a fixed position and holds the die plate 13 in a fixed position. Both the holding fixture and the die plate are detachable, such that they can be exchanged or replaced in an easy way, and are held in position by positioning means, such as pins, studs or the like. The holding fixture is provided with a bottom 15 on which the tray can rest in order to give support to the complete tray. This is advantageous in that a supplementary food container standing in the tray will also be supported during the sealing operation. This allows the supplementary food container to be sealed in the same operation with the same lid. The holding fixture can be exchanged to a holding fixture adapted for a tray having another height. If the sealing machine is to be used with only one type of trays, the bottom can also be fixedly mounted in the lower part.

The holding fixture further comprises a cartridge 16 having two knives, a front knife 17 and a rear knife 18. The knives will cut the foil by the front edge 10 and the rear edge 11 of the tray 9. One advantage of providing a knife both at the front edge and the rear edge of the tray is that the upper part can be provided with stretching devices 19 that will stretch the foil over the tray when the upper part is lowered. The stretching of the foil prior to the sealing allows the use of a thinner foil, which will save material and weight. Further, a stretched lid will give a more appealing appearance of a ready meal in the tray. The stretching devices 19 are e.g. two resilient members that are fixed in the upper part and that will tension the foil when the upper part is lowered. To improve the stretching of the foil, the foil may be positioned on two foil positioning means 24 on the lower part, e.g. two studs to which two holes in the foil will match or a clamping means.

The knives are held in the cartridge in a movable way. The knives can move up and down by a lever 20 that is operated by the handle. The knives are held in a lower rest position by resilient means, such as springs. In the lower position, the cutting edges of the knives will be below the upper surface of the die plate. The knives will thus be out of reach for the user of the sealing machine. In order for the knives to be able to move up and down, the die plate is provided with corresponding longitudinal grooves 21 through which the knives may extend. The cutting edge of a knife may either be a sharp knife edge that will cut the foil by its sharpness, or it may be a sharp 90 degrees edge that forms a cutting tool together with the corresponding edge of the sealing surface.

When a tray is to be sealed in the sealing machine, a single tray is placed in the die plate of the sealing machine. The upper part is lowered towards the lower part with the handle such that the sealing surface 22 of the sealing plate rests on the rim 12 of the tray. When the sealing position is reached, the handle is pivoted forward around the rotatable joint 7 to the cutting position. The forward tilt of the handle will actuate a lever 20 that pushes the knives up through the longitudinal groove in the die plate and further towards the foil that is now pressed between the sealing plate and the rim of the tray. Since the foil is also stretched by the stretching devices, the knives can cut the foil without the need of a counter cutting groove having a surface on each side of a knife. The knives are positioned very close to the edges of the tray and thus also to the edges of the sealing surface. The sealing surface edges may thus function as counter anvils for the cutting edge of the knives.

The length of the knives are such that they extend along the front respectively rear edges of the tray. If the tray is provided with a cut-out at the front and/or rear edge of the tray, the knife may be accordingly shorter. The cut-out is in this case preformed in the lidding foil and must not be cut by the knives. The knives may also be shaped according to the shape of the front and rear edges, e.g. be slightly curved, such that a clean cut close to the edge is provided. The longitudinal grooves are of course shaped in the same way. When the shape of the tray is circular or oval, the foil is preferably preformed such that a part of the shape is already present in the foil. The knives will then only have to cut the remaining part of the foil, which will give a clean appearance also for round trays. Each knife may in this case cover approximately between 60 and 90 degrees of the circumferential of the tray. Also other shapes of the tray can be cut clean by using a preformed foil. For complicated tray shapes, it is possible to combine several knives in order to obtain the desired cutting shape. When a preformed foil is used, it is important to use some kind of positioning means to align the preformed foil to the tray.

The knife cartridge 16 is detachably mounted in the lower part and can easily be removed or exchanged. The knife cartridge may e.g. rest on the sides of the bottom of the holding fixture such that it is not in the way for the tray, or may slide in grooves in the sides of the holding fixture. The knife cartridge is held in a fixed position by positioning means, such as pins, studs or the like. The knife cartridge may be exchanged separately to another knife cartridge, or the knife cartridge may be exchanged together with the holding fixture and the die plate. One advantage of being able to remove the knife cartridge separately is that the knife cartridge may be exchanged without having to remove the holding fixture. This is of advantage when the knives need to be replaced or when the knives need to be cleaned. Since there may be some spillage of food on the tray rim during the insertion of food in the trays, some food may contaminate the knives. There is thus a need to be able to clean the knives separately. By removing the knife cartridge separately, it is also easy to replace or sharpen the knives.

When a new type of tray is to be sealed, the parts that need to be exchanged are removed. If a tray with the same shape but another height is to be sealed, it is enough to exchange the holding fixture. The same sealing plate, die plate and knife cartridge can thus be used. For a tray with a different shape, the complete holding fixture with die plate and knife cartridge is exchanged, together with the sealing plate.

The invention is not to be regarded as being limited to the embodiments described above, a number of additional variants and modifications being possible within the scope of the subsequent patent claims.

### REFERENCE SIGNS

- 1:: Sealing machine
- 2:: Upper part
- 3:: Lower part
- 4:: Sealing plate
- 5:: Rotatable joint
- 6:: Handle
- 7:: Rotatable joint
- 8:: Gas spring
- 9:: Tray
- 10:: Front edge
- 11:: Rear edge
- 12:: Rim
- 13:: Die plate
- 14:: Holding fixture
- 15:: Bottom
- 16:: Cartridge
- 17:: Front knife
- 18:: Rear knife
- 19:: Stretching device
- 20:: Lever
- 21:: Longitudinal groove
- 22:: Sealing surface
- 23:: Foil
- 24:: Positioning means
- 25:: Raised edge

## Claims

1. A sealing machine (1) for sealing a disposable tray, comprising an upper part (2) and a lower part (3), where the upper part comprises a sealing plate (4) having a sealing surface (22) adapted to heat a foil such that the foil adheres to the rim (12) of a tray (9), **characterized in that** the lower part (3) comprises a plurality of knives (17, 18) that are adapted to cut the foil by a movement of the knife in an upward direction towards the foil, and where the knives (17, 18) are fixedly mounted in a detachable cartridge (16).

2. Sealing machine according to claim 1, **characterized in that** the cartridge (16) comprises resilient means adapted to hold the cutting edges of the knives (17, 18) below the sealing surface (22) when the upper part (2) is in a rest position.

3. Sealing machine according to any of the preceding claims, **characterized in that** the knives (17, 18) are pushed upwards by a lever (20) that is actuated by the handle (6) when the upper part is in a cutting position.

4. Sealing machine according to any of the preceding claims, **characterized in that** the knives (17,18) extend through longitudinal grooves (21) in a die plate (13).

5. Sealing machine according to claim 4, **characterized in that** the cartridge (16) is integrated with the die plate (13) and a holding fixture (14).

6. Sealing machine according to any of the preceding claims, **characterized in that** the sealing plate (4) is detachably mounted in the upper part (2) and is adapted to be replaced with another sealing plate (4).

7. Sealing machine according to any of the preceding claims, **characterized in that** the lower part (3) further comprises a bottom (15) adapted to support the bottom of the tray (9).

8. Sealing machine according to any of the preceding claims, **characterized in that** the upper part (2) comprises stretching devices (19) adapted to bear on the foil on each side of the tray (9) in order to tension the foil when the upper part (2) is in a sealing position.

9. Sealing machine according to any of the preceding claims, **characterized in that** the lower part (3) comprises positioning means (24) adapted to position the foil in a predetermined position.

## Patentansprüche

1. Abdichtungsmaschine (1) zum Abdichten einer Einwegschale, umfassend einen oberen Teil (2) und einen unteren Teil (3), wobei der obere Teil eine Abdichtungsplatte (4) mit einer Abdichtungsfläche (22) umfasst, die ausgelegt ist, um eine Folie zu erwärmen, so dass die Folie an den Rand (12) einer Schale (9) haftet, **dadurch gekennzeichnet, dass** der untere Teil (3) eine Vielzahl von Messern (17, 18) aufweist, die ausgelegt sind, um die Folie durch eine Bewegung des Messers in einer Richtung nach oben hin zur Folie zu schneiden, und wobei die Messer (17, 18) fest in einer abnehmbaren Patrone (16) montiert sind.

2. Abdichtungsmaschine nach Anspruch 1, **dadurch gekennzeichnet, dass** die Patrone (16) elastische Mittel umfasst, die ausgelegt sind, um die Schneidekanten der Messer (17, 18) unter der Abdichtungsfläche (22) zu halten, wenn sich der obere Teil (2) in einer Ruheposition befindet.

3. Abdichtungsmaschine nach einem der vorhergehenden Ansprüche, **dadurch gekennzeichnet, dass** die Messer (17, 18) durch einen Hebel (20) nach oben geschoben werden, der durch den Griff (6) betätigt wird, wenn sich der obere Teil in einer Schneideposition befindet.

4. Abdichtungsmaschine nach einem der vorhergehenden Ansprüche, **dadurch gekennzeichnet, dass** sich die Messer (17, 18) durch Längsnuten (21) in einer Formplatte (13) erstrecken.

5. Abdichtungsmaschine nach Anspruch 4, **dadurch gekennzeichnet, dass** die Patrone (16) mit der Formplatte (13) und einer Haltebefestigung (14) integriert ist.

6. Abdichtungsmaschine nach einem der vorhergehenden Ansprüche, **dadurch gekennzeichnet, dass** die Abdichtungsplatte (4) abnehmbar im oberen Teil (2) montiert und ausgelegt ist, um durch eine andere Abdichtplatte (4) ersetzt zu werden.

7. Abdichtungsmaschine nach einem der vorhergehenden Ansprüche, **dadurch gekennzeichnet, dass** der untere Teil (3) weiter einen Boden (15) umfasst, der ausgelegt ist, um den Boden der Schale (9) zu stützen.

8. Abdichtungsmaschine nach einem der vorhergehenden Ansprüche, **dadurch gekennzeichnet, dass** der obere Teil (2) Dehnvorrichtungen (19) umfasst, die ausgelegt sind, um die Folie auf jeder Seite der Schale (9) zu tragen, um die Folie zu spannen, wenn sich der obere Teil (2) einer Abdichtungsposition befindet.

9. Abdichtungsmaschine nach einem der vorhergehenden Ansprüche, **dadurch gekennzeichnet, dass** der untere Teil (3) Positionierungsmittel (24) umfasst, die ausgelegt sind, um die Folie in einer vorbestimmten Position zu positionieren.

## Revendications

1. Machine à sceller (1) pour sceller un plateau jetable, comprenant une partie supérieure (2) et une partie inférieure (3), dans laquelle la partie supérieure comprend une plaque de scellement (4) ayant une surface de scellement (22) adaptée pour chauffer une feuille de sorte que la feuille adhère au bord (12) d'un plateau (9), **caractérisée en ce que** la partie inférieure (3) comprend une pluralité de couteaux (17, 18) qui sont adaptés pour couper la feuille grâce à un mouvement du couteau dans une direction ascendante vers la feuille, et dans laquelle les couteaux (17, 18) sont montés de manière fixe dans une cartouche détachable (16).

2. Machine à sceller selon la revendication 1, **caractérisée en ce que** la cartouche (16) comprend un moyen résilient adapté pour maintenir les arêtes de coupe des couteaux (17, 18) au-dessous de la surface de scellement (22) lorsque la partie supérieure (2) est dans une position de repos.

3. Machine à sceller selon l'une quelconque des revendications précédentes, **caractérisée en ce que** les couteaux (17, 18) sont poussés vers le haut par un levier (20) qui est actionné par la poignée (6) lorsque la partie supérieure est dans une position de coupe.

4. Machine à sceller selon l'une quelconque des revendications précédentes, **caractérisée en ce que** les couteaux (17, 18) s'étendent à travers des rainures longitudinales (21) dans une plaque de matrice (13).

5. Machine à sceller selon la revendication 4, **caractérisée en ce que** la cartouche (16) est intégrée avec la plaque de matrice (13) et une fixation de maintien (14).

6. Machine à sceller selon l'une quelconque des revendications précédentes, **caractérisée en ce que** la plaque de scellement (4) est montée de manière détachable dans la partie supérieure (2) et est adaptée pour être remplacée par une autre plaque de scellement (4).

7. Machine à sceller selon l'une quelconque des revendications précédentes, **caractérisée en ce que** la partie inférieure (3) comprend en outre un fond (15) adapté pour supporter le fond du plateau (9).

8. Machine à sceller selon l'une quelconque des revendications précédentes, **caractérisée en ce que** la partie supérieure (2) comprend des dispositifs d'étirement (19) adaptés pour s'appuyer sur la feuille de chaque côté du plateau (9) afin de tendre la feuille lorsque la partie supérieure (2) est dans une position de scellement.

9. Machine à sceller selon l'une quelconque des revendications précédentes, **caractérisée en ce que** la partie inférieure (3) comprend un moyen de positionnement (24) adapté pour positionner la feuille dans une position prédéterminée.
